# EUROPEAN PATENT SPECIFICATION

(11) **EP 1 071 868 B1**
(45) Date of publication and mention of the grant of the patent: **28.08.2002**
(21) Application number: 99913472.9
(22) Date of filing: 29.03.1999
(51) Int. Cl.: F01N 7/08

(54) **MOTOR VEHICLE EXHAUST SYSTEM**
ABGASANLAGE FÜR EIN KRAFTFAHRZEUG
SYSTEME D'ECHAPPEMENT DE VEHICULE A MOTEUR

(30) Priority: 06.04.1998 GB 9807172; 24.04.1998 GB 9808664; 16.10.1998 GB 9822484; 04.12.1998 GB 9826581; 18.12.1998 GB 9827788; 18.12.1998 GB 9827791; 22.02.1999 GB 9903866
(43) Date of publication of application: 31.01.2001
(73) Proprietor: Ford Global Technologies, Inc., Dearborn, Michigan 48126 (US)
(72) Inventor: MA, Thomas, Tsoi, Hei, Chelmsford,Essex CM3 5YL (GB); MA, Jonathan, Austin, Chelmsford,Essex CM3 5YL (GB)
(74) Representative: Messulam, Alec Moses
(86) International application number: GB9900971
(87) International publication number: WO99051861

(56) References cited:
- US-A- 3 685 615
- US-A- 4 465 154

## Description

### Field of the invention

The present invention relates to a motor vehicle driven by an internal combustion engine having an exhaust system designed to minimise the formation of particulate matter after the exhaust gases are discharged into the ambient atmosphere.

### Background of the invention

It is found that particulate matter having particle size in the nanometre range, hereinafter termed nano-particles, are formed in diesel and petrol engines, not inside the engine or inside the exhaust system, but outside the exhaust system when the exhaust gases are diluted and cooled in ambient air.

Particles may be formed by nucleation or may grow by condensation whenever the saturation ratio, which is the ratio of the partial pressure of a condensable material to its vapour pressure, exceeds unity. The saturation ratio depends on the concentrations of the condensable material in the exhaust gases, the exhaust gas temperature, the dilution air temperature and composition, and the air/exhaust dilution ratio. Because of the competition between partial pressure and temperature effects, for volatile materials like unburnt and partially burnt fuel, lubricating oil and sulphur compounds, the maximum saturation ratio exceeding unity is achieved during dilution and cooling of the exhaust gases, occurring at air/exhaust dilution ratios between 5:1 and 30:1 and producing a large number of nano-particles. At dilution ratios above 100:1, the saturation ratio drops well below unity and the gas-particle conversion process is stopped completely.

After the hot exhaust gases have been discharged into the ambient air, they are progressively diluted and cooled, and while going from very concentrated exhaust gases to a very diluted mixture, the mixture must at some stage go through all the intermediate dilution ratios and achieve the maximum saturation ratio at some time.

The residence time of the gases in the regions of high saturation ratio is also an important factor affecting the formation of nano-particles. In practice, it is found that a dilution ratio in the range of 5:1 to 30:1 and a residence time in excess of 200 ms at those ratios are the most favourable conditions for the volatile materials in the exhaust gases to be converted into nano-particles. On the other hand, conversion into nano-particles is suppressed if the residence time at those ratios is kept as short as possible, certainly no longer than 100 ms.

Although the nano-particles formed will eventually grow by coagulation to larger particles of sizes up to 1000 nm, the number of particles in this entire size range, irrespective of its chemical composition, has become the cause of concern of late because the particles are small enough to penetrate and deposit deep inside the lungs of humans and animals. Depending on air movement, the hazard can persist for minutes or even hours and will tend to be more noticeable in the vicinity of roadways and congested traffic areas.

### Summary of the invention

According to the present invention in its broadest aspect, there is provided a motor vehicle driven by an internal combustion engine having an exhaust system, wherein the discharge section of the exhaust system from which the engine exhaust gases are discharged into the ambient atmosphere extends transversely to the direction of motion of the vehicle and comprises a plurality of discharge regions distributed along the discharge section, and wherein, when the vehicle is driven at urban speeds, the aerodynamic flow in the vicinity of the discharge regions is such that the exhaust gases from the engine are uniformly diluted in less than 100 ms in the air slipstream of the moving vehicle to fall below the saturation limit above which nano-particles may form by nucleation.

Expressed in terms of vehicle speed and vehicle dimensions, it is preferred that the aerodynamic flow in the vicinity of the discharge regions should be such that when the vehicle is driven at a steady speed of 50 kph, the exhaust gases from the engine are uniformly diluted with air to an air/exhaust dilution ratio of at least 100:1 within 2 metres behind the discharge section.

It is further preferred that the aerodynamic flow in the vicinity of the discharge regions should be such that when the vehicle is travelling at a steady speed of 50 kph, the exhaust gases from the engine are uniformly diluted with air to an air/exhaust dilution ratio of at least 50:1 within 1 metre behind the discharge section.

The term "uniformly diluted" excludes what is herein termed "macro-mixing" which is a dispersion process in which the overall dilution ratio is increased abruptly by scattering bubbles or pockets of exhaust gases into a large volume of air yet the bubbles are still big enough to contain substantial quantities of concentrated exhaust gases transported bodily with the air. The term "uniformly diluted" is instead intended to cover what is herein termed "micro-mixing" which is an entrainment process in which the overall dilution ratio is increased progressively by the ambient air dragging the exhaust gases and shearing them layer by layer so that thorough mixing is achieved and no sizeable pockets of exhaust gases are present in the diluted mixture. It is by virtue of micro-mixing that the invention is distinguished from prior art systems as discussed below.

In GB 424,469 an extension pipe is fitted to the conventional exhaust pipe and arranged to convey the exhaust gases to the top of a vehicle where they are discharged through perforations in the top or sides of a horizontal part near the closed end of the pipe in order to disperse the exhaust gases in small streams across the width of the vehicle.

In US 3,952,823 the exhaust gases from a moving vehicle are discharged from a chamber with an elongated aperture in a flow direction parallel to the direction of air flow past the vehicle and an aerofoil member is provided oriented relative to the elongated aperture to effect an increase in air flow velocity past the aperture in order to create a suction at the elongate aperture.

In US 4,665,691 an aspirating means is provided comprising a plenum chamber with a discharge slot along its length connected to the engine exhaust system and positioned across the flow of air at the top of an air deflector of a moving truck tractor for pulling a trailer, and a vane forming in conjunction with the plenum chamber a venturi throat to reduce the air pressure at the discharge slot for suctioning exhaust gases from the exhaust system.

All of the above known exhaust systems are effective in dispersing the exhaust gases rapidly behind a moving vehicle yet they have been found experimentally to fail completely in suppressing the formation of nano-particles especially at low road speeds below 50 kph where the air slipstream is relatively weak compared with the exhaust flow. Indeed, it has surprisingly been found that significantly more nano-particles are produced by such systems than with a concentrated exhaust plume.

The present invention is based on the realisation that the dilution process and the cooling process to which the exhaust gases are subjected are important factors affecting the formation of nano-particles. Particles may be formed by nucleation or may grow by condensation whenever the saturation ratio, which is the ratio of the partial pressure of a condensable material to its vapour pressure, exceeds unity. When the exhaust gases are diluted in ambient air, the partial pressure of the condensable or volatile materials in the diluted mixture decreases as the air/exhaust dilution ratio increases, thus reducing the saturation ratio. On the other hand, cooling of the exhaust gases causes the vapour pressure of the volatile materials to decrease, thus increasing the saturation ratio. Competition of the two effects would determine whether the saturation ratio in the diluted mixture decreases or increases relative to unity depending on the dilution effect having a stronger influence than the cooling effect or vice-versa respectively. As a further consideration, it should be kept in mind that the dilution process automatically produces cooling by direct fluid mixing, whereas the cooling process may take place by various other means without mixing, such as by thermal conduction and thermal radiation.

In the known exhaust systems, the dilution process is that of dispersion and macro-mixing. In particular, the exhaust flow is split into small streams or spread into a thin sheet and these would penetrate into the air slipstream and detach as bubbles from the discharge regions. Once detached, the bubbles would quickly reach the same velocity as the air slipstream and thereafter meander along and break up into smaller bubbles only by the surrounding air turbulence. Under such conditions, sizeable bubbles of hot exhaust gases containing volatile materials can persist for some time, not mixed with air internally but carried along bodily with the air. Cooling of the exhaust gases within the bubbles could take place rapidly by thermal conduction with little fluid mixing resulting in high saturation ratios above the saturation limit locally at the boundaries and producing a large number of nano-particles. Thus, in macro-mixing, not all the exhaust gases are mixed uniformly and local concentrations could persist long enough to promote the formation of nano-particles.

By contrast, the present invention takes steps to prevent the exhaust gases from detaching into bubbles outside the discharge regions and to ensure that the exhaust gases and ambient air are thoroughly mixed by micro-mixing.

This can be achieved in the preferred embodiments of the invention by providing a wall adjacent to the exhaust flow so that the flow will attach to the wall over a substantial distance along the wall after leaving the discharge regions and is sheared layer by layer by the air slipstream while being dragged along the wall. In this case, substantially all the exhaust gases are mixed thoroughly with air to a high dilution ratio with little cooling of scattered pockets of gases by thermal conduction locally, so that the saturation ratio passes homogeneously through its maximum value very quickly and thereafter decreases rapidly, thus suppressing the formation of nano-particles.

It is important that the exhaust flow should attach to the wall for a substantial length after leaving the discharge regions and in this respect it is desirable that the wall should have a longitudinal dimension at least ten times as great as the opening of the discharge regions measured along the air slipstream.

The orientation of the discharge regions may be such that the direction of the exhaust flow at the mouths of the discharge regions is substantially parallel to the wall so that the exhaust flow will attach to the wall. In this case, it is important to ensure that the velocity of the exhaust flow along the wall should be significantly slower than the velocity of the air slipstream in order to achieve the desired shearing effect.

To this end, the size of the discharge regions should be such that the velocity of the exhaust flow at the mouths of the discharge regions is less than one quarter of the velocity of the air slipstream near the discharge regions so that the slower exhaust flow is dragged along the wall and sheared layer by layer by the faster air slipstream.

Alternatively, the orientation of the discharge regions may be such that the direction of the exhaust flow at the mouths of the discharge regions is substantially normal to the wall, and the size of the discharge regions may be such that the velocity of the exhaust flow at the mouths of the discharge regions is less than one tenth of the velocity of the air slipstream near the discharge regions, so that the exhaust flow is deflected sufficiently by the air slipstream to attach to the wall and thereafter is dragged along the wall and sheared layer by layer by the faster air slipstream.

A design of the exhaust system that promotes micro-mixing comprises a plenum chamber into which opens an exhaust supply pipe, the plenum chamber having an adjacent or integral wall lying parallel to the air slipstream and having discharge regions disposed near the upstream edge of the wall. The length of the wall downstream of the discharge regions should be at least ten times as great as the opening of the discharge regions measured along the air slipstream so that the attached exhaust flow is dragged over a substantial distance along the wall by the air slipstream.

Preferably, the total flow cross-sectional area of the discharge regions in the plenum chamber should be larger than ten times the flow cross-sectional area of the exhaust supply pipe so that the velocity of the exhaust flow at the mouths of the discharge regions is less than one tenth of that at the exhaust supply pipe. Under such conditions, the velocity of the exhaust flow at the mouths of the discharge regions would be very low and could be less than one tenth, or even less than one twentieth, of the velocity of the air slipstream near the discharge regions so that the exhaust flow will be deflected sufficiently by the air slipstream to attach to the wall and thereafter is dragged along the wall and shear layer by layer by the air slipstream.

Preferably, the wall is heated on the other side of the wall by hot exhaust gases supplied to the plenum chamber. This prevents the exhaust flow from being cooled adversely by the wall, but instead the hot wall heats the attached exhaust flow and reduces the saturation ratio, thus further reducing the tendency to form nano-particles.

The discharge regions may comprise either a single slot or a series of openings distributed along the length and breadth of the plenum chamber. The aspect ratio of the openings in relation to the flow direction of the air slipstream should be such that the air will flow over the openings without entering the openings. To that effect, an elongate slot arranged transversely to the direction of the air slipstream is to be preferred. A raised lip near the leading edge of the slot would ensure that the slipstream does not enter into the plenum chamber.

Preferably, the wall extending downstream of the discharge regions is slightly angled or curved towards the air slipstream to force the exhaust flow to attach to the wall.

Preferably, an air guide is provided near the wall downstream of the discharge regions to channel the air slipstream and force the exhaust flow to attach to the wall.

Preferably, a bank of vortex generating vanes is provided downstream of the wall for breaking up the exhaust flow as it detaches from the wall where the mixing process changes from micro-mixing to macro-mixing.

An air scoop may be provided near the discharge section to increase the velocity of the air slipstream by channelling the slipstream close to the mouths of the discharge regions.

Alternatively, two discharge sections may be provided adjacent one another with their respective discharge regions facing each other. The upstream walls of the discharge sections act as air scoops to increase the velocity of the air slipstream close to the mouths of the discharge regions. The downstream walls of the discharge sections act as air guides to force the respective exhaust flows to attach to their associated adjacent walls.

The air scoop may form part of a passage connected to the engine compartment of the vehicle to collect ambient air that has passed through the engine compartment and has been warmed by the hot components, such as the radiator, engine block, exhaust manifold etc, in the engine compartment. In this case, the warmer air arriving at the discharge section causes the saturation ratio in the diluted exhaust flow to decrease and further reduces the tendency to form nano-particles.

It is also advantageous to make use of the aerodynamic shape of the vehicle to increase the velocity of the air slipstream near the discharge regions. For example. the discharge section of the exhaust system may be installed under a vehicle with the discharge regions opening into the air slipstream beneath the vehicle. Furthermore, the speed of the air slipstream flowing beneath the vehicle may be increased by streamlining the underside of the vehicle to form along its length a convergent passage in conjunction with the ground. The discharge regions may be positioned near the throat of the convergent passage to take advantage of the higher air velocity near the throat.

An alternative position for installing the discharge section on the vehicle is to combine it with an air spoiler mounted near the rear end of the vehicle. The discharge regions may be positioned on the upper surface of the spoiler near the leading edge of the spoiler so that the exhaust flow will attach along the upper surface of the spoiler.

In designing an exhaust system to promote micro-mixing and to suppress the formation of nano-particles, the effectiveness would depend on keeping the exhaust flow attached to a wall for as far as possible downstream of the discharge regions, and maintaining a relative velocity ratio between the air slipstream and the exhaust flow as high as possible so that the latter is dragged along the wall and sheared layer by layer by the air slipstream, neither of these features was appreciated in the known exhaust systems. In the present invention, since the air and exhaust velocities would scale approximately with road speed and engine load respectively, it is possible to optimise the exhaust design to suit different vehicles and different driving conditions in order to suppress the formation of nano-particles especially where there is a high risk of exposure, for example under urban driving conditions.

### Brief description of the drawings

The invention will now be described further, by way of example, with reference to the accompanying drawings, in which:
Figure 1 is a schematic perspective view of the discharge section of the exhaust system of a motor vehicle of the invention,
Figure 2 shows a section through the discharge section of an exhaust system not in accordance with the invention illustrating the effect of macro-mixing,
Figure 3 shows a similar section through the discharge section of an exhaust system of the invention in which the aerodynamic flow in the vicinity of the discharge regions ensures micro-mixing,
Figures 4 to 6 show three further embodiments of the invention that are improvements on that shown in Figure 3, and
Figures 7 to 10 show four different installations of the discharge section of the invention on a motor vehicle.

### Detailed description of the preferred embodiments

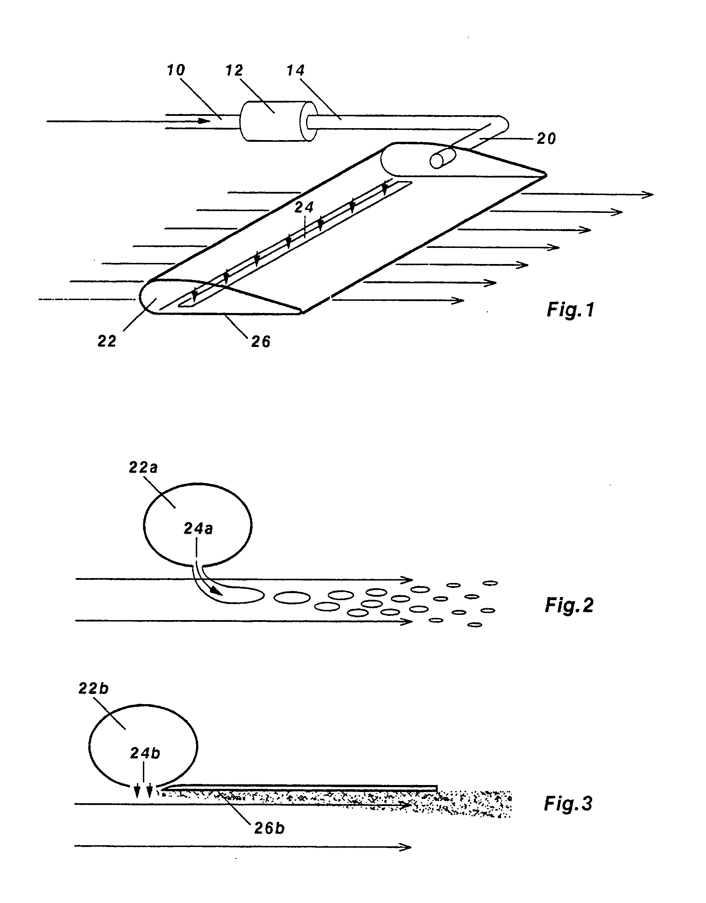

In Figure 1 there is shown an exhaust pipe 10 having a silencer or muffler 12 followed by a discharge pipe 14. Conventionally the discharge pipe 14 would open directly to the atmosphere, but in the present invention, the end 20 of the discharge pipe 14 is bent through a right angle and introduces the exhaust gases into a plenum chamber 22 having a much larger cross section than the pipe 14. The effect of the plenum chamber 22 is to absorb the momentum of the exhaust gases discharging from the pipe 14 and to produce a generally even pressure only slightly higher than the atmospheric pressure. A long discharge slot 24 or a series of discharge openings is formed on the underside of the plenum chamber 22 and is disposed transversely to the direction of the air slipstream represented by a set of long arrows. The flow cross-sectional area of the slot 24 is much larger than ten times the flow cross-sectional area of the pipe 14 so that the exhaust gases would leak out slowly into the air slipstream at much less than one tenth the velocity at the pipe 14 and much less than one twentieth of the velocity of the nearby air slipstream.

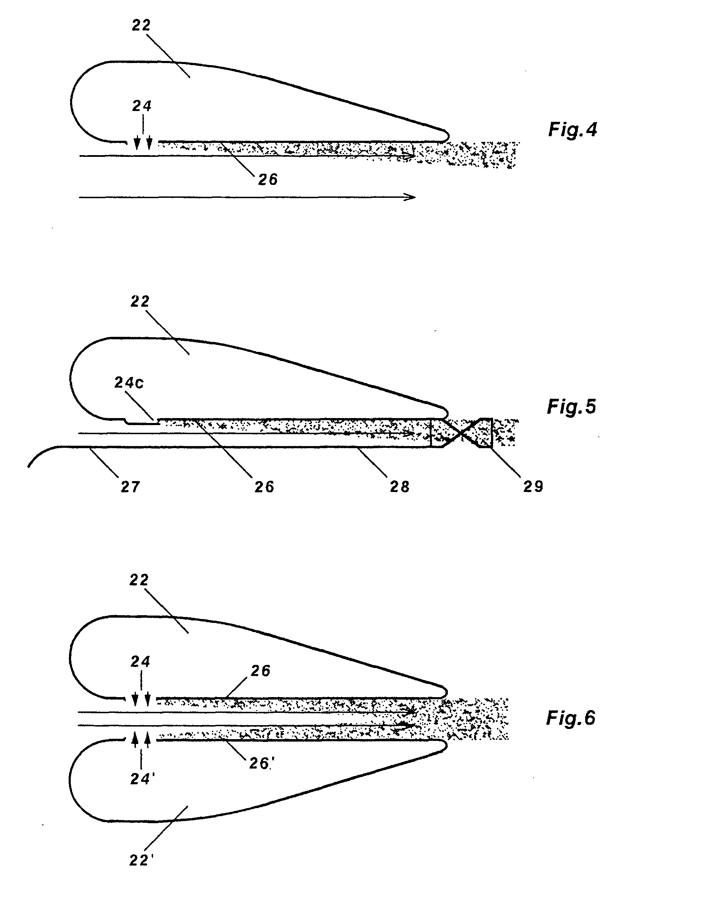

The exhaust flow leaving the mouth of the discharge slot 24 travels at right angles to the air slipstream and is deflected by the air slipstream as shown in Figure 4. The deflected angle of the exhaust layer is very shallow when the exhaust velocity is less than one twentieth of the air velocity so that the thickness of the exhaust layer will be very small.

The plenum chamber 22 in Figure 4 is shaped to provide a wall 26 downstream of the discharge slot 24 so that the exhaust layer attaches to the wall 26 over a distance of at least ten times as great as the opening of the discharge slot 24 measured along the air slipstream. Thus the slower exhaust flow is dragged along the wall 26 and sheared layer by layer by the faster air slipstream as shown in Figure 4, achieving micro-mixing very effectively.

The effect that needs to be avoided is that shown in Figure 2 where, because of the absence of a wall to which the exhaust flow could attach, the exhaust gases are discharged from the slot 24a as a jet undergoing macro-mixing in which bubbles of exhaust gases penetrate into the air slipstream and detach from the discharge section. Once detached, the bubbles would quickly reach the same velocity as the air slipstream and thereafter meander along and break up into smaller bubbles only by the surrounding air turbulence. Within this macro-mixed mixture, the conditions that favour the formation of nano-particles are present in the vicinity of each bubble where there will be high concentrations of exhaust gases remaining near each other for considerable lengths of time. Cooling of the exhaust gases within the bubbles takes place rapidly by thermal conduction with little fluid mixing resulting in high saturation ratios above the saturation limit locally at the boundaries and producing a large number of nano-particles.

By contrast, the presence of a wall 26b which may be a body panel of the vehicle as shown in Figure 3, ensures the exhaust flow is attached to a solid boundary in the present invention, undergoing micro-mixing in which the exhaust flow is dragged along the wall 26b and sheared layer by layer by the air slipstream. In this case, substantially all the exhaust gases are mixed thoroughly with air to a high dilution ratio with little cooling of scattered pockets of gases by thermal conduction locally, so that the saturation ratio passes homogeneously through its maximum value and thereafter decreases rapidly, thus suppressing the formation of nano-particles.

In order to prevent the exhaust flow from being cooled adversely by the solid boundary to which it is attached, the wall 26 in Figure 4 is heated from inside the plenum chamber 22 by the hot exhaust gases supplied to the plenum chamber 22. The resulting hot wall 26 heats the attached exhaust flow and reduces the saturation ratio, thus further reducing the tendency to form nano-particles.

One lip of the discharge slot 24 in Figure 4 may be raised in the manner shown to ensure that the slipstream does not enter into the plenum chamber 22.

The lip may be extended sufficiently to alter the direction of the exhaust flow at the mouth of the discharge slot 24c from substantially normal to the wall 26 to almost parallel to the wall 26 as shown in Figure 5. In the latter case, the exhaust flow will automatically attach to the wall 26 and there will be no need for it to be deflected by the air slipstream so that its velocity ratio relative to the air slipstream need not be lower than one tenth. The velocity of the exhaust flow however should not be similar to the velocity of the air slipstream because then there will be little fluid mixing between the two streams. Preferably, the size of the discharge slot 24c is such that the velocity of the exhaust flow is less than one quarter of the velocity of the air slipstream so that the slower exhaust flow is dragged along the wall 26 and sheared layer by layer by the faster air slipstream.

In Figure 5, micro-mixing is improved still further by the addition of an air scoop 27 combined with an air guide 28 positioned near the plenum chamber 22 to increase the velocity of the air slipstream and to force the exhaust flow to attach to the wall 26.

In Figure 5, a bank of vortex generating vanes 29 are also provided downstream of the wall 26 to break up the exhaust flow as it detaches from the wall where the mixing process changes from micro-mixing to macro-mixing.

In Figure 6, two plenum chambers 22, 22' are arranged adjacent one another with their respective slots 24, 24' facing each other. In this case, the upstream walls of the plenum chambers 22, 22' act as air scoops to increase the velocity of the air slipstream close to the mouths of the respective slots 24, 24', and the downstream walls of the plenum chambers 22, 22' act as air guides to force the respective exhaust flows to attach to their associated adjacent walls 26, 26'.

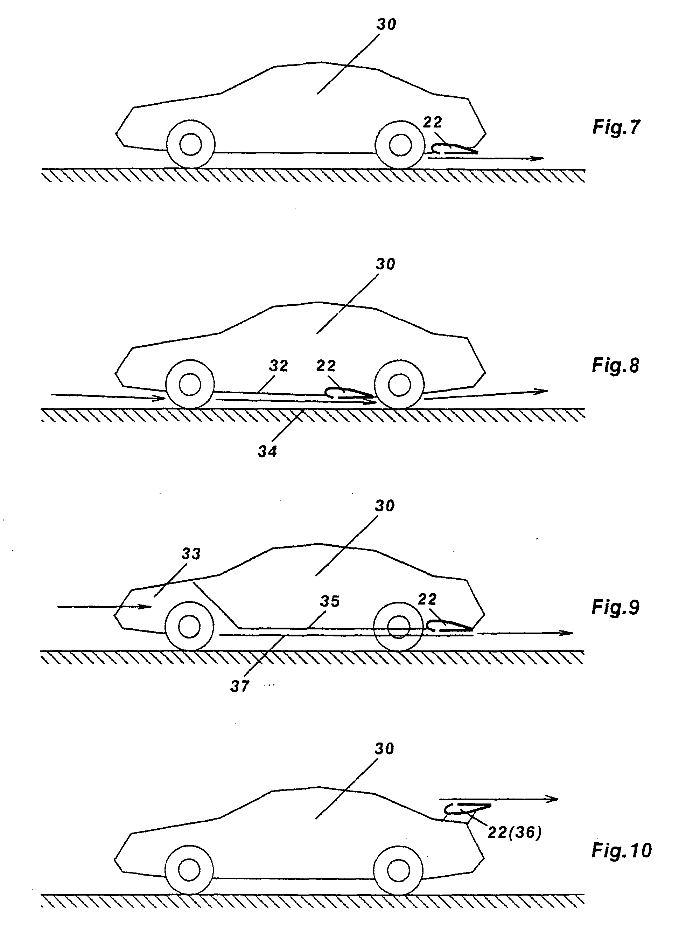

In Figure 7, the plenum chamber 22 is installed under a vehicle 30 with the discharge slot opening into the air slipstream beneath the vehicle 30.

The speed of the air slipstream flowing beneath the vehicle 30 is increased by streamlining the underside 32 of the vehicle to form along its length a convergent passage in conjunction with the ground 34 as shown in Figure 8. The discharge section 22 is positioned near the throat of the convergent passage to take advantage of the higher air velocity near the throat.

In Figure 9, the temperature of the air slipstream arriving at the discharge section 22 is increased by arranging an air scoop and air guide 37 to form in conjunction with the vehicle floor pan 35 a passage connected to the engine compartment 33 to collect ambient air that has passed through the engine compartment 33 and has been warmed by the hot components, such as the radiator, engine block, exhaust manifold etc, in the engine compartment. The warmer air arriving at the discharge section 22 causes the saturation ratio in the diluted exhaust flow to decrease and further reduces the tendency to form nano-particles

Figure 10 shows an alternative position for installing the plenum chamber 22 on the vehicle 30 by combining it with an air spoiler 36 mounted near the rear end of the vehicle 30. The discharge slot 24 is positioned on the upper surface and near the leading edge of the spoiler 36 so that the exhaust flow will attach along the upper surface of the spoiler 36. A supply pipe (not shown) connects the plenum chamber 22 to the exhaust system of the engine via a support member for the spoiler 36.

## Claims

1. A motor vehicle driven by an internal combustion engine having an exhaust system, wherein the discharge section (22) of the exhaust system from which the engine exhaust gases are discharged into the ambient atmosphere extends transversely to the direction of motion of the vehicle and comprises a plurality of discharge regions (24) distributed along the discharge section (22), **characterised in that**, when the vehicle is driven at urban speeds, the aerodynamic flow in the vicinity of the discharge regions (24) is such that the exhaust gases from the engine are uniformly diluted in less than 100 ms in the air slipstream of the moving vehicle to fall below the saturation limit above which nano-particles may form by nucleation.

2. A motor vehicle as claimed in claim 1, wherein the aerodynamic flow in the vicinity of the discharge regions is such that when the vehicle is driven at a steady speed of 50 kilometres per hour, the exhaust gases from the engine are uniformly diluted with air to an air/exhaust dilution ratio of at least 100:1 within 2 metres behind the discharge section.

3. A motor vehicle as claimed in claim 1 or 2, wherein the aerodynamic flow in the vicinity of the discharge regions is such that when the vehicle is travelling at a steady speed of 50 kilometres per hour, the exhaust gases from the engine are uniformly diluted with air to an air/exhaust dilution ratio of at least 50:1 within 1 metre behind the discharge section.

4. A motor vehicle as claimed in any preceding claim, wherein a wall (26) is provided adjacent to the exhaust flow so that the flow will attach to the wall (26) over a substantial distance along the wall after leaving the discharge regions and is sheared layer by layer by the air slipstream while being dragged along the wall.

5. A motor vehicle as claimed in claim 4, wherein the wall forms part of the vehicle body distinct from the exhaust system.

6. A motor vehicle as claimed in claim 4, wherein the wall (26) forms part of the discharge section (22) of the exhaust system.

7. A motor vehicle as claimed in any of claims 4 to 6, wherein the longitudinal length of the wall (26) downstream of the discharge regions is at least ten times as great as the opening of the discharge regions measured along the air slipstream.

8. A motor vehicle as claimed in any of claims 4 to 7, wherein the orientation of the discharge regions is such that the direction of the exhaust flow at the mouths of the discharge regions (is substantially parallel to the wall and the size of the discharge regions (24) is such that the velocity of the exhaust flow at the mouths of the discharge regions is less than one quarter of the velocity of the air slipstream near the discharge regions.

9. A motor vehicle as claimed in any of claims 4 to 7, wherein the orientation of the discharge regions is such that the direction of the exhaust flow at the mouths of the discharge regions is substantially normal to the wall and the size of the discharge regions is such that the velocity of the exhaust flow at the mouths of the discharge regions (24) is less than one tenth of the velocity of the air slipstream near the discharge regions.

10. A motor vehicle as claimed in any preceding claim, wherein the discharge section (22) of the exhaust system comprises a plenum chamber (22) into which opens an exhaust supply pipe (20) and having discharge regions (24) disposed near the upstream edge of the wall (26,20), the total flow cross-sectional area of the discharge regions (24) being larger than ten times the flow cross-sectional area of the exhaust supply pipe so that the velocity of the exhaust flow at the mouths of the discharge regions is less than one tenth of that at the exhaust supply pipe.

11. A motor vehicle as claimed in any preceding claim, wherein the discharge regions (24) comprise a series of openings distributed along the length and breadth of the discharge section (22).

12. A motor vehicle as claimed in any one of claims 1 to 10, wherein the discharge regions (24) comprise at least one elongate slot arranged transversely to the direction of the air slipstream.

13. A motor vehicle as claimed in any preceding claim, wherein a raised lip is provided near the leading edge of each discharge region (24c) to prevent the air slipstream from entering the discharge region.

14. A motor vehicle as claimed in Claim 4 or any claim appended thereto, wherein the wall (26) is heated.

15. A motor vehicle as claimed in Claim 4 or any claim appended thereto, wherein the wall (26) is angled or curved towards the air slipstream to force the exhaust flow to attach to the wall.

16. A motor vehicle as claimed in Claim 4 or any claim appended thereto, wherein an air guide (28) is provided near the wall (26) to channel the air slipstream and force the exhaust flow to attach to the wall.

17. A motor vehicle as claimed in Claim 4 or any claim appended thereto, wherein a bank of vortex generating vanes (29) is provided downstream of the wall (26) for breaking up the exhaust flow as it detaches from the wall and develops into macro-mixing.

18. A motor vehicle as claimed in any preceding claim, wherein an air scoop (27) is provided near the discharge section (22) to increase the velocity of the air slipstream by channelling the slipstream close to the mouths of the discharge regions (24).

19. A motor vehicle as claimed in any preceding claim, wherein two discharge sections (22,22') are provided adjacent one another with their respective discharge regions (24,24') facing each other, and wherein the upstream walls (26,26') of the discharge sections act as air scoops to increase the velocity of the air slipstream close to the mouths of the discharge regions.

20. A motor vehicle as claimed in claim 18 or 19, wherein the air scoop (27) forms part of a passage connected to the engine compartment of the vehicle to collect ambient air that has passed through the engine compartment and has been warmed by the hot components in the engine compartment.

21. A motor vehicle as claimed in any preceding claim, wherein the discharge section of the exhaust system is installed under a vehicle (30) with the discharge regions opening into the air slipstream beneath the vehicle.

22. A motor vehicle as claimed in claim 21, wherein the underside of the vehicle (30) is streamlined to form along its length a convergent passage in conjunction with the ground and the discharge regions are positioned near the throat of the convergent passage.

23. A motor vehicle as claimed in Claim 4, wherein the discharge section (22) is combined with an air spoiler (36) mounted near the rear end of the vehicle(30), the discharge regions being positioned on the upper surface and near the leading edge of the spoiler so that the exhaust flow will attach along the upper surface of the spoiler.

## Patentansprüche

1. Ein durch einen Verbrennungsmotor angetriebenes Motorfahrzeug, das ein Abgassystem aufweist; in dem der Ausstoßabschnitt (22) des Abgassystems, aus welchem die Motorabgase in die Umgebungsluft ausgestoßen werden, sich quer zur Bewegungsrichtung des Fahrzeuges erstreckt und eine Mehrzahl entlang des Ausstoßabschnittes verteilter Ausstoßbereiche (24) umfaßt; **dadurch gekennzeichnet, daß** der aerodynamische Strom in der Nähe der Ausstoßbereiche (24), wenn das Fahrzeug bei Stadtgeschwindigkeiten gefahren wird, derart ist daß die Abgase vom Motor in weniger als 100 ms gleichmäßig in der Luft-Nachströmung des sich bewegenden Fahrzeugs verdünnt werden; um unter die Sättigungsgrenze zu fallen, oberhalb welcher sich durch Keimbildung Nanopartikel bilden können.

2. Ein Motorfahrzeug gemäß Anspruch 1, in dem der aerodynamische Strom in der Nähe der Ausstoßbereiche derart ist, daß die Abgase vom Motor innerhalb von 2 Metern hinter dem Ausstoßabschnitt mit Luft einheitlich auf ein Luft/Abgas-Verdünnungsverhältnis von mindestens 100:1 verdünnt werden, wenn das Fahrzeug mit einer gleichmäßigen Geschwindigkeit von 50 Kilometern pro Stunde gefahren wird.

3. Ein Motorfahrzeug gemäß den Ansprüchen 1 oder 2, in dem der aerodynamische Strom in der Nähe der Ausstoßbereiche derart ist, daß die Abgase vom Motor innerhalb von 1 Meter hinter dem Ausstoßabschnitt einheitlich auf ein Luft/Abgas-Verdünnungsverhältnis von mindestens 50:1 verdünnt werden, wenn sich das Fahrzeug mit einer gleichmäßigen Geschwindigkeit von 50 Kilometer pro Stunde bewegt.

4. Ein Motorfahrzeug gemäß einem der vorstehenden Ansprüche, in dem an den Abgasstrom angrenzend eine Wand (26) bereitgestellt wird, so daß der Strom sich nach Verlassen der Ausstoßbereiche über eine wesentliche Strecke hinweg entlang der Wand (26) anhängen wird; und durch den Luft-Nachstrom Schicht für Schicht abgeschert wird, während er an der Wand entlanggezogen wird.

5. Ein Motorfahrzeug gemäß Anspruch 4, in dem die Wand einem vom Abgassystem verschiedenen Teil der Fahrzeugkarosserie bildet.

6. Ein Motorfahrzeug gemäß Anspruch 4, in dem die Wand (26) einen Teil des Ausstoßabschnitts (22) des Abgassystems bildet.

7. Ein Motorfahrzeug gemäß einem der Ansprüche 4 bis 6, in dem die längsgerichtete Länge der Wand (26) stromabwärts der Ausstoßbereiche mindestens zehnmal so groß ist wie die Öffnung der Ausstoßbereiche, gemessen entlang der Luft-Nachströmung.

8. Ein Motorfahrzeug gemäß einem der Ansprüche 4 bis 7, in dem die Ausrichtung der Ausstoßbereiche derart ist daß die Richtung des Abgasstroms an den Mündungen der Ausstoßbereiche (24) im Wesentlichen parallel zur Wand ist; und in dem die Größe der Ausstoßbereiche (24) derart ist daß die Geschwindigkeit des Abgasstroms an den Mündungen der Ausstoßbereiche geringer ist als ein Viertel der Geschwindigkeit der Luft-Nachströmung nahe der Ausstoßbereiche.

9. Ein Motorfahrzeug gemäß einem der Ansprüche 4 bis 7, in dem die Ausrichtung der Ausstoßbereiche derart ist daß die Richtung des Abgasstroms an den Mündungen der Ausstoßbereiche im Wesentlichen senkrecht zur Wand ist; und in dem die Größe der Ausstoßbereiche derart ist daß die Geschwindigkeit des Abgasstroms an den Mündungen der Ausstoßbereiche (24) geringer ist als ein Zehntel der Geschwindigkeit der Luft-Nachströmung nahe der Ausstoßbereiche.

10. Ein Motorfahrzeug gemäß einem der vorstehenden Ansprüche, in dem der Ausstoßabschnitt (22) des Abgassystems eine Plenumkammer (22) umfaßt, in welche hinein sich eine Abgas-Versorgungsleitung (20) öffnet, und die nahe der oberstromigen Kante der Wand (26, 20) angeordnete Ausstoßbereiche (24) aufweist; wobei die gesamte Durchfluß-Querschnittsfläche der Ausstoßbereiche (24) größer ist als zehnmal die Durchfluß-Querschnittsfläche der Abgas-Versorgungsleitung, so daß die Geschwindigkeit des Abgasstromes an den Mündungen der Ausstoßbereiche niedriger ist als ein Zehntel jener in der Abgas-Versorgungsleitung.

11. Ein Motorfahrzeug gemäß einem der vorstehenden Ansprüche, in dem die Ausstoßbereiche (24) eine Reihe von Öffnungen umfassen, die entlang der Länge und Breite des Ausstoßabschnittes (22) verteilt sind.

12. Ein Motorfahrzeug gemäß einem der Ansprüche 1 bis 10, in dem die Ausstoßbereiche (24) mindestens einen verlängerten Schlitz umfassen, der quer zur Richtung der Luft-Nachströmung angeordnet ist.

13. Ein Motorfahrzeug gemäß einem der vorstehenden Ansprüche, in dem nahe der Vorderkante jedes Ausstoßbereiches (24c) eine erhöhte Lippe bereitgestellt wird, um die Luft-Nachströmung daran zu hindern in den Ausstoßbereich einzutreten.

14. Ein Motorfahrzeug gemäß Anspruch 4 oder eines hieran angefügten Anspruches, in dem die Wand (26) beheizt ist.

15. Ein Motorfahrzeug gemäß Anspruch 4 oder eines hieran angefügten Anspruches, in dem die Wand (26) auf die Luft-Nachströmung hin gewinkelt oder gebogen ist, um die Luft-Nachströmung dazu zu zwingen sich an die Wand anzuhängen.

16. Ein Motorfahrzeug gemäß Anspruch 4 oder eines hieran angefügten Anspruches, in dem nahe der Wand (26) eine Luftführung (28) bereitgestellt wird, um die Luft-Nachströmung zu kanalisieren und den Abgasstrom dazu zu zwingen sich an die Wand anzuhängen.

17. Ein Motorfahrzeug gemäß Anspruch 4 oder eines hieran angefügten Anspruches, in dem stromabwärts der Wand (26) eine Reihe von Wirbel erzeugenden Flügeln (29) bereitgestellt wird, um den Abgasstrom aufzubrechen während er sich von der Wand ablöst und sich in die Makro-Mischung hinein entwickelt.

18. Ein Motorfahrzeug gemäß einem der vorstehenden Ansprüche, in dem nahe des Ausstoßabschnittes (22) eine Lufthutze (27) bereitgestellt wird, um die Geschwindigkeit der Luft-Nachströmung zu steigern, indem die Luft-Nachströmung nahe der Mündungen der Ausstoßbereiche (24) kanalisiert wird.

19. Ein Motorfahrzeug gemäß einem der vorstehenden Ansprüche, in dem zwei Ausstoßabschnitte (22, 22') einander angrenzend bereitgestellt werden, wobei ihre entsprechenden Ausstoßbereiche (24, 24') einander zuweisen, und worin die oberstromigen Wände (26, 26) der Ausstoßabschnitte als Lufthutzen wirken, um die Geschwindigkeit der Luft-Nachströmung nahe der Mündungen der Ausstoßbereiche zu steigern.

20. Ein Motorfahrzeug gemäß Anspruch 18 oder 19, in dem die Lufthutze einen Teil eines mit dem Motorraum des Fahrzeuges verbundenen Durchgangs bildet, um Luft zu sammeln die durch den Motorraum hindurchgetreten ist und durch die heißen Bauteile im Motorraum erwärmt wurde.

21. Ein Motorfahrzeug gemäß einem der vorstehenden Ansprüche, in dem der Ausstoßabschnitt des Abgassystems unter einem Fahrzeug (30) eingebaut ist, wobei sich die Ausstoßbereiche in die Luft-Nachströmung unterhalb des Fahrzeuges hinein öffnen.

22. Ein Motorfahrzeug gemäß Anspruch 21, in dem die Unterseite des Fahrzeugs (30) stromlinienförmig gemacht ist, um entlang ihrer Länge in Verbindung mit dem Boden einen sich verjüngenden Durchgang zu bilden, und in dem die Ausstoßbereiche sich nahe der Kehle des sich verjüngenden Durchganges befinden.

23. Ein Motorfahrzeug gemäß Anspruch 4, in dem der Ausstoßabschnitt (22) mit einem nahe der Hinterkante des Fahrzeuges (30) montierten Luftspoiler (36) montiert ist, wobei die Ausstoßbereiche an der oberen Fläche und nahe der Vorderkante des Spoilers angeordnet sind, so daß der Abgasstrom sich über die obere Oberfläche des Spoilers hinweg anhängen wird.

## Revendications

1. Véhicule à moteur entraîné par un moteur à combustion interne comportant un système d'échappement, dans lequel la section de refoulement (22) du système d'échappement depuis lequel les gaz d'échappement du moteur sont refoulés dans l'atmosphère ambiante s'étend transversalement à la direction de déplacement du véhicule et comprend une pluralité de régions de refoulement (24) réparties le long de la section de refoulement (22), **caractérisé en ce que**, lorsque le véhicule est conduit à des vitesses urbaines, l'écoulement aérodynamique au voisinage des régions de refoulement (24) est tel que les gaz d'échappement provenant du moteur sont uniformément dilués en moins de 100 ms dans le glissement d'air du véhicule en déplacement pour tomber au-dessous de la limite de saturation au-dessus de laquelle des nanoparticules peuvent se former par nucléation.

2. Véhicule à moteur selon la revendication 1, dans lequel l'écoulement aérodynamique au voisinage des régions de refoulement est tel que lorsque le véhicule est conduit à une vitesse stable de 50 kilomètres à l'heure, les gaz d'échappement provenant du moteur soient uniformément dilués avec l'air à un taux de dilution air/échappement d'au moins 100:1 en moins de 2 mètres derrière la section de refoulement.

3. Véhicule à moteur selon la revendication 1 ou 2, dans lequel l'écoulement aérodynamique au voisinage des régions de refoulement est tel que lorsque le véhicule se déplace à une vitesse stable de 50 kilomètres à l'heure, les gaz d'échappement provenant du moteur soient uniformément dilués avec l'air à un taux de dilution air/échappement d'au moins 50:1 en moins de 1 mètre derrière la section de refoulement.

4. Véhicule à moteur selon l'une quelconque des revendications précédentes, dans lequel une paroi (26) est disposée de façon contiguë à l'écoulement d'échappement de sorte que l'écoulement se fixera à la paroi (26) sur une distance substantielle le long de la paroi après avoir quitté les régions de refoulement et qu'il soit cisaillé couche par couche par le glissement d'air tout en étant entraîné le long de la paroi.

5. Véhicule à moteur selon la revendication 4, dans lequel la paroi fait partie de la carrosserie du véhicule, de façon distincte du système d'échappement.

6. Véhicule à moteur selon la revendication 4, dans lequel la paroi (26) fait partie de la section de refoulement (22) du système d'échappement.

7. Véhicule à moteur selon l'une quelconque des revendications 4 à 6, dans lequel la longueur longitudinale de la paroi (26) en aval des régions de refoulement est au moins dix fois plus grande que l'ouverture des régions de refoulement mesurée le long du glissement d'air.

8. Véhicule à moteur selon l'une quelconque des revendications 4 à 7, dans lequel l'orientation des régions de refoulement est telle que la direction de l'écoulement d'échappement au niveau des embouchures des régions de refoulement est sensiblement parallèle à la paroi et la dimension des régions de refoulement (24) est telle que la vitesse de l'écoulement d'échappement au niveau des embouchures des régions de refoulement est inférieure au quart de la vitesse du glissement d'air près des régions de refoulement.

9. Véhicule à moteur selon l'une quelconque des revendications 4 à 7, dans lequel l'orientation des régions de refoulement est telle que la direction de l'écoulement d'échappement au niveau des embouchures des régions de refoulement est sensiblement perpendiculaire à la paroi et la dimension des régions de refoulement est telle que la vitesse de l'écoulement d'échappement au niveau des embouchures des régions de refoulement (24) est inférieure au dixième de la vitesse du glissement d'air près des régions de refoulement.

10. Véhicule à moteur selon l'une quelconque des revendications précédentes, dans lequel la section de refoulement (22) du système d'échappement comprend une chambre d'équilibre (22) dans laquelle débouche un tuyau d'échappement (20) et comportant des régions de refoulement (24) disposées près du bord amont de la paroi (26, 20), la surface totale de la section transversale d'écoulement des régions de refoulement (24) étant supérieure à dix fois la surface de section transversale d'écoulement du tuyau d'échappement de sorte que la vitesse de l'écoulement d'échappement au niveau des embouchures des régions de refoulement est inférieure au dixième de celle du tuyau d'échappement.

11. Véhicule à moteur selon l'une quelconque des revendications précédentes, dans lequel les régions de refoulement (24) comprennent une série d'ouvertures distribuées suivant la longueur et la largeur de la section de refoulement (22).

12. Véhicule à moteur selon l'une quelconque des revendications 1 à 10, dans lequel les régions de refoulement (24) comprennent au moins une fente allongée disposée transversalement à la direction du glissement d'air.

13. Véhicule à moteur selon l'une quelconque des revendications précédentes, dans lequel un rebord surélevé est prévu près du bord avant de chaque région de refoulement (24c) afin d'empêcher le glissement d'air de pénétrer dans la région de refoulement.

14. Véhicule à moteur selon la revendication 4 ou l'une quelconque des revendications annexées à celle-ci, dans lequel la paroi (26) est chauffée.

15. Véhicule à moteur selon la revendication 4 ou l'une quelconque des revendications annexées à celle-ci, dans lequel la paroi (26) fait un angle ou est incurvée en direction du glissement d'air afin d'obliger l'écoulement d'échappement à se fixer à la paroi.

16. Véhicule à moteur selon la revendication 4 ou l'une quelconque des revendications annexées à celle-ci, dans lequel un guide d'air (28) est disposé près de la paroi (26) afin de canaliser le glissement d'air et d'obliger l'écoulement d'échappement à se fixer à la paroi.

17. Véhicule à moteur selon la revendication 4 ou l'une quelconque des revendications annexées à celle-ci, dans lequel une rangée d'aubes de génération de tourbillon (29) est disposée en aval de la paroi (26) en vue de décomposer l'écoulement d'échappement lorsqu'il se détache de la paroi et se développe en macromélange.

18. Véhicule à moteur selon l'une quelconque des revendications précédentes, dans lequel une partie incurvée pour l'air (27) est disposés près de la section de refoulement (22) afin d'augmenter la vitesse du glissement d'air en canalisant le glissement près des embouchures des régions de refoulement (24).

19. Véhicule à moteur selon l'une quelconque des revendications précédentes, dans lequel deux sections de refoulement (22, 22') sont disposées de façon contiguë l'une à l'autre, leurs régions de refoulement respectives (24, 24') faisant face l'une à l'autre, et dans lequel les parois amont (26, 26') des sections de refoulement agissent en tant que parties incurvées pour l'air afin d'augmenter la vitesse du glissement d'air près des embouchures des régions de refoulement.

20. Véhicule à moteur selon la revendication 18 ou 19, dans lequel la partie incurvée pour l'air (27) fait partie d'un passage raccordé au compartiment moteur du véhicule en vue de recueillir l'air ambiant qui est passé au travers du compartiment moteur et a été chauffé par les composants chauds dans le compartiment moteur.

21. Véhicule à moteur selon l'une quelconque des revendications précédentes, dans lequel la section de refoulement du système d'échappement est installée sous un véhicule (30), les régions de refoulement débouchant dans le glissement d'air au-dessous du véhicule.

22. Véhicule à moteur selon la revendication 21, dans lequel le dessous du véhicule (30) est profilé afin de former suivant sa longueur un passage convergent conjointement avec le sol et les régions de refoulement sont positionnées près de l'étranglement du passage convergent.

23. Véhicule à moteur selon la revendication 4, dans lequel la section de refoulement (22) est combinée à un becquet d'air (36) monté près de l'extrémité arrière du véhicule (30), les régions de refoulement étant positionnées sur la surface supérieure et près du bord avant du becquet de sorte que l'écoulement d'échappement se fixera le long de la surface supérieure du becquet.
